# EUROPEAN PATENT SPECIFICATION

(11) **EP 0 472 039 B1**
(45) Date of publication and mention of the grant of the patent: **27.03.1996**
(21) Application number: 91113114.2
(22) Date of filing: 05.08.1991
(51) Int. Cl.: G08B 17/103, G01S 17/02

(54) **Fire detecting method and device**
Feuer-Detektierungsverfahren und -vorrichtung
Procédé et dispositif pour la détection d'incendie

(30) Priority: 23.08.1990 JP 219918/90
(43) Date of publication of application: 26.02.1992
(73) Proprietor: NOHMI BOSAI LTD., Tokyo 102 (JP)
(72) Inventor: Inoue, Masao, Chiyoda-ku, Tokyo 102 (JP); Igarashi, Yoshinori, Chiyoda-ku, Tokyo 102 (JP)
(74) Representative: Paschedag, Hansjoachim

(56) References cited:
- EP-A- 0 371 326
- WO-A-82/03487
- US-A- 3 788 742

## Description

The present invention relates to a fire detecting method in which a beam of electromagnetic radiation is emitted into an space to be surveilled, the radiation returned from the said space is measured and a fire signal is generated in response to a predetermined change of the measured returned radiation, and to a device for carrying out the method.

Various types of fire detectors are known in the art (see for example WO-A-8203487). Typical examples are thermal fire detectors which detect heat from a fire by means of bimetal elements flipping over or by pneumatic chambers expanding at elevated temperatures, ionization chamber detectors determining ionization current changes caused by aerosol or smoke particles, photoelectric smoke detectors which are determining the intensity of light scattered by smoke or a reduction in light permeability due to the presence of smoke in a measuring chamber or in an area to be surveilled, and radiation type flame detectors which notify the outbreak of a fire by detecting heat radiation from a fire or flickering flames by means of an infrared radiation detector. All this prior art fire detectors respond preferably to a single fire phenomenon, but are rather ineffective with respect to other types of fire. For example, ionization fire detectors are very sensible to small aerosol particles generated in the early stage of a fire, but are rather insensitive to open flames, scattered light detectors are sensing very well white smoke, but hardly black smoke, while obscuration type detectors are sensing preferably black smoke, but to a much less degree flames, and photoelectric flame detectors respond rather quickly to open flames, but are widely insensitive to smouldering fires or smoke.

A further drawback of known fire detection systems is that, for surveilling a large space, it is necessary to install a large number of detectors, for instance on the ceiling of the surveilled room, or in the case of obscuration type detectors, when used in a wide space, a number of light transmitters and receivers has to be installed in order to sufficiently cover the area to be surveilled.

It is an object of the present invention to eliminate the above-indicated drawbacks of the prior art and to provide a fire detecting method and device which is able to detect fires of different types more reliably, avoiding an insensitivity to special fire phenomena, and with a more simple installation and a smaller number of detectors in a wider space.

According to the present invention, the travel time of the returned radiation between emitting said radiation and receiving said returned radiation is measured and compared with a previously stored travel time, and a fire signal is generated when the measured travel time is deviating in a predetermined manner from the previously stored travel time.

According to a preferred embodiment of the invention, for detecting a fire more reliably and for discriminating different types of fire, additionally the intensity of the returned radiation is detected and evaluated.

Preferably, pulsed radiation in the near infrared range of the spectrum is used, as e.g. produced by a laser device, but according to the given circumstances, using other types of radiation in adjacent spectral regions may be workable and useful.

A fire detection device according to the invention is equipped with a transmitter projecting a beam of electromagnetic radiation into the space to be surveilled, with detecting means for receiving returned radiation reflected from objects in the space and means for measuring the return time of the radiation between transmitting and receiving, with comparision means for comparing the measured return times with previously stored return times, and with discriminating means for generating a fire signal when the measured return times are deviating in a predetermined manner from the previously stored return times.

The stored return time values may be obtained by directing the beam of the transmitter into the space towards the opposite surface of the room wall or of another object in the space and measuring the reflection time of the radiation from said surface in absence of any fire, similarly to a laser beam distance meter, and by storing the reflection time corresponding to the distance to the surface. Therein, the reference values may be stored at the time when the fire detecting device is installed, or storing could be repeated after installation in order to take into consideration intermediate changes in the space.

Preferably, the radiation beam transmitter may be installed on a mounting base which can freely be turned in any direction, thus enabling measurement of travel times or distances to plural opposite surfaces of the space or room, wherein each of the reflection times is stored in the memory means each transmitter position.

By evaluating the return time of reflected radiation instead of merely the intensity of received radiation, the fire discriminating means according to the present invention judges that black smoke is generating if the return time or measured distance exceeds the stored reference value and shows hardly any fluctuation, while white smoke is indicated if the distance or reflection time is less than the reference value stored in the memory and fluctuations are hardly seen, and the existence of flames is noticed if the distance or reflection time measured by the detector differs from the stored reference value and shows fluctuations.

Therefore, this fire detection device gives a different indication when white or black smoke or flames exist between the beam type transmitter and receiver and an opposite surface such as a room surface towards which the measuring beam is directed and which is forming a reflection surface for providing a reference value. By previously storing the reference values and measuring the distance or travel time of reflected radiation and its intensity and comparing the same with the reference values, any outbreak of a fire is detected reliably.

Embodiments of the present invention are discribed with reference to the enclosed figures.
- Fig. 1: shows a space in which a fire detecting device is installed,
- Fig. 2: shows the change of return time of reflected radiation in the presence of white smoke,
- Fig. 3: shows the change of the intensity of radiation reflected by white smoke,
- Fig. 4: shows the change of return time in presence of black smoke,
- Fig. 5: shows the change of intensity of reflected radiation in presence of black smoke,
- Fig. 6: shows the change of measured return time in the presence of flames,
- Fig. 7: shows a block circuit diagram of an embodiment of a fire detecting device,
- Fig. 8: shows a block circuit diagram of an embodiment of the internal circuit of the detecting device according to fig. 7,
- Fig. 9A and 9B: show flowcharts of two embodiments of programs for operating fire detecting devices,
- Fig. 10: shows a flowchart of a discrimination program for white smoke, black smoke, and flames.

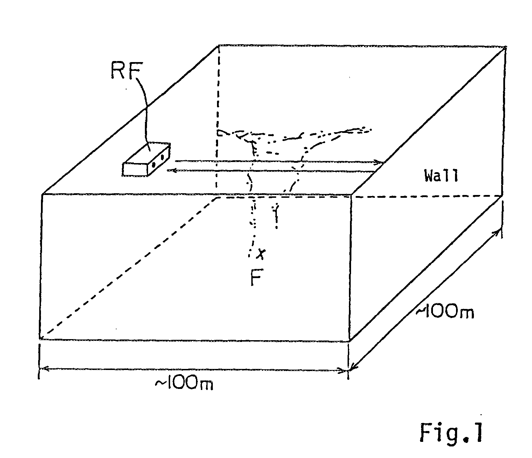

As shown in Fig. 1, a beam type radiation transmitter and receiver RF is installed on one side of the space to be surveilled. The transmitter may be a laser which is producing a narrow pulsed radiation beam, e.g. a typical laser diode emitting pulses of 10 - 20 nano-seconds duration with a pulse rate frequency of e.g. 0.5 - 1.5 kHz in the near infrared spectral range having a wavelength of about 0.9 microns. The laser beam is projected from the transmitter RF into the space and reflected from an object, e.g. the opposite wall, and the reflected radiation is then returned to the receiver, which is determining the travel time of the radiation pulses between emitting and receiving. This measured return time is equivalent to the distance of the object by which the radiation pulses were reflected, either by the opposite wall or by an intermediate object such as a fire F.

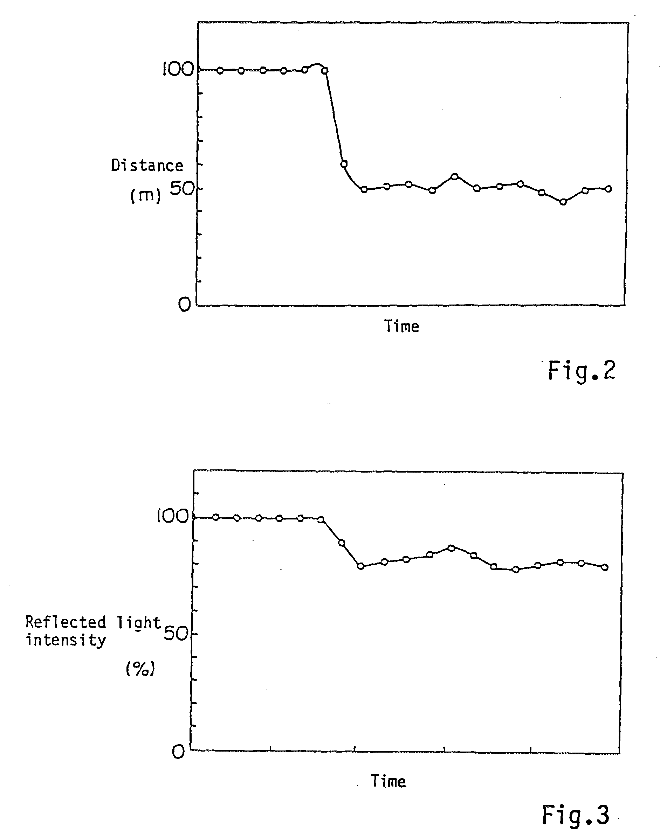

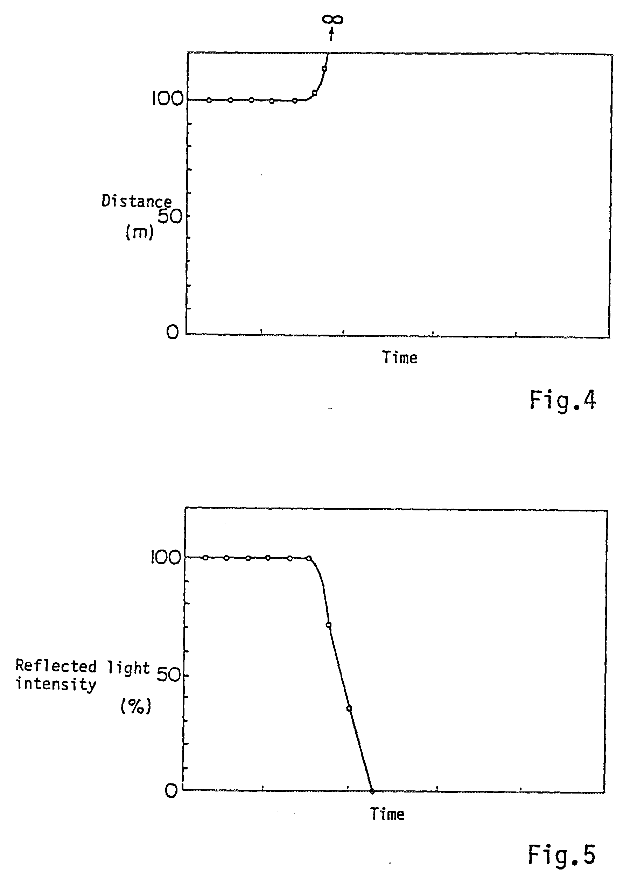

Fig. 2 - 5 demonstrate the influence of smoke and flames on the distance measured by a laser device of the above type in an arrangement according to Fig. 1 in which the laser beam is directed to the opposite wall, and fires of different types, e.g. a fuel or oil fire, or burning wood pieces were placed between the laser device RF and the opposite wall. Fig. 2 and 4 show on the vertical axis the changes of the measured distances versus the lapse of time on the horizontal axis after generation of white and black smoke, while Fig. 3 and 5 show changes of reflected light intensity on the vertical axis versus lapse of time on the horizontal axis, in the cases of white and black smoke.

As shown in Fig. 2, with white smoke generated by burning wood pieces, the measured distance is decreasing, so that a shorter distance is measured than measured without smoke when the measured travel time corresponds to the distance of the opposite wall.

On the other hand, as shown in Fig. 4, with black smoke generated by burning oil, differing from the case with white smoke, the receiver is indicating a longer distance than that to the opposite surface on which the laser beam is reflected when there is no smoke. In specific cases, the indicated measured "distance" may become infinite.

Moreover, as shown in Fig. 3, in presence of white smoke the reflected light intensity, i.e. the intensity of the measuring beam returned to the receiver is decreasing although it varies with the distance to smoke. On the other hand, with black smoke, as shown in Fig. 5, the intensity comes close to zero.

As can be seen from these figures, a shorter distance and a longer distance than the actual distance to the opposite surface is indicated in presence of white smoke and black smoke, respectively. It is assumed that these differences in the reading are attributed to the following causes which seem not to have been considered for detecting and discriminating fires, so far. In the case of white smoke, the laser beam is reflected by the smoke and distance meter is measuring this slightly reflected beam and indicates a shorter distance, while in presence of black smoke, the laser beam is absorbed by the smoke, thus the distance meter cannot detect any reflection of the laser beam and is indicating an infinite distance.

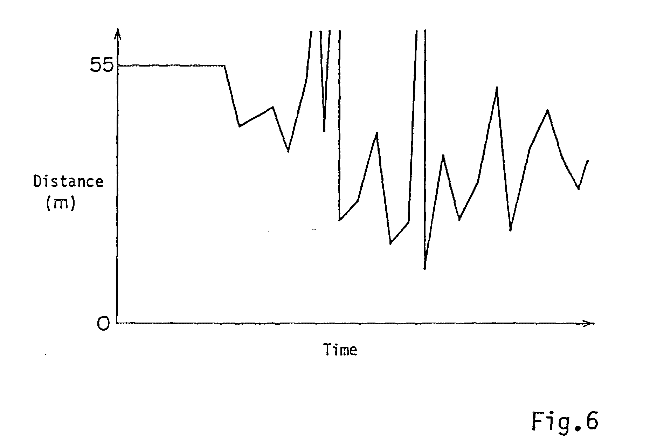

Fig. 6 shows the changes of the measured distance on the vertical axis versus the lapse of time on the horizontal axis after generation of an open flame. When the laser beam was projected towards the opposite surface through the flame the distance meter indicates a different distance compared with the distance of the opposite wall measured without presence of a flame. Furthermore, in the case of a flame, the measured distance shows strong fluctuations, differeing from the case with smoke. It was noted, that in the case where the flame is located at a close distance, e.g. at 15 meters, it showed fluctuating changes in reading around a distance far from the real flame point.

It is assumed that such changes of measured distances with flames are caused by changes in the phase of the laser beam when projected through the flame.

It was noted that sunlight or illumination lamps which are irradiating into the space or directly on the receiver did not influence the reading of the distance.

The laser type used in the described fire detecting device was the one requiring no reflection mirror on the opposite surface. Those phenomena described above occured with a laser beam with a wavelength of electromagnetic radiation in the visible and near infrared range from 0.6 to 3 microns, approximately.

As can be seen from the foregoing, it is possible to detect smoke and flames by a method which differs from the conventional light scattering or light obscuration methods if a beam type distance meter is used for measuring the travel time of returned radiation or the distance to a surface to which the beam is directed, e.g. the distance to the opposite wall or the ceiling in a structure, and for making judgements when there is a change in the measured distance and/or the reflected light intensity of the beam, in the following way:
1. When the measured distance shows a change, shorter or longer, from the reference distance, e.g. from the distance to the wall surface, smoke is existing between the distance meter and the reference reflection surface
2. It can be seen that white smoke is generating when the measured distance is shorter than the reference distance, and it is also possible to determine thereby the distance of the fire in case of white smoke.
3. It can be seen that black smoke is generating when the measured distance is longer than the reference distance.
4. It can be seen that a flame is generating when there is fluctuation of the measured distance.
5. Besides detecting a fire in general, it is possible to discriminate different kinds of fire, like smoke from items (2) and (3), and flames from item (4).
6. When the measured reflected light intensity shows a change from the reference reflected light intensity, e.g. received light intensity of the measuring beam as reflected on the wall surface, there exists smoke between the distance meter and the reference surface.
7. It can be seen that black smoke is generating when the measured reflected light intensity shows much decrease from the reference reflected light intensity.
8. It can be seen that white smoke is generating when the measured reflected light intensity shows little decrase from the reference reflected light intensity.
9. It is possible to detect smoke generation due to fire from item (6) and to discriminate kinds of smoke from items (7) and (8).
10. It is possible to detect smoke and flame generation from results of comparision between the measured distance and the reference distance, and also to make more accurate discrimination as to kinds of smoke by combined using results of comparision between the measured reflected light intensity and the reference reflected light intensity.

Therefore, a fire detecting device which detects fire by smoke and flames is obtained by providing a discriminating circuit which compares the distance measured and/or the reflected light intensity received by the distance meter with the reference distance and/or the reference reflected light intensity in the distant meter assembly for a fire control panel or a repeater to which the distance meter is connected.

The reference distance and/or the reference reflected light intensity is/are set by previously measuring the distance of the reflecting object from the detector, the reflection rate of the reflecting object etc., and storing them in storage means as reference values. By comparing the set reference values with the measured values, it is possible to detect any generation of smoke or flames. By monitoring such difference from the reference value as found by comparision, it is also possible to discriminate whether the difference is due to the presence of smoke or flames, or by interruption of the light beam by a human body or an object, thus preventing false alarms. Further, it is possible to determine kinds or characteristics of smoke.

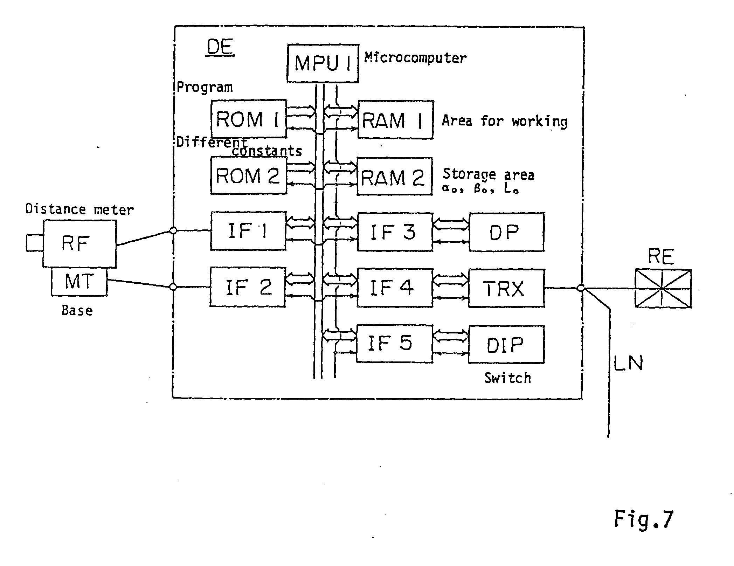

Fig. 7 shows a block diagram of a fire detecting device operating according to the above method. Therein is:
- RF: a laser type distance meter to measure the distance by the travel time of returned radiation,
- MT: a mounting base or electrically operated turn base on which the distance meter RF is mounted so that the entire space can be scanned for fire surveillance by moving the measuring beam in horizontal and vertical directions and also its own turning positions, i.e. rotation and elevation angles can be output.
- DE: a detecting unit which outputs instructions for distance measuring and turning to the distance meter RF and the electrically operated turn base MT respectively, and which makes "fire" judgement with measured distance data provided by the distance meter RF as per instruction for distance measuring and with the data on rotation and elevation angles provided by the electrically operated turn base MT as per instruction for turning.
- RE: a fire control panel which receives the "fire" judgement made by the detecting unit DE through the signal line LN.

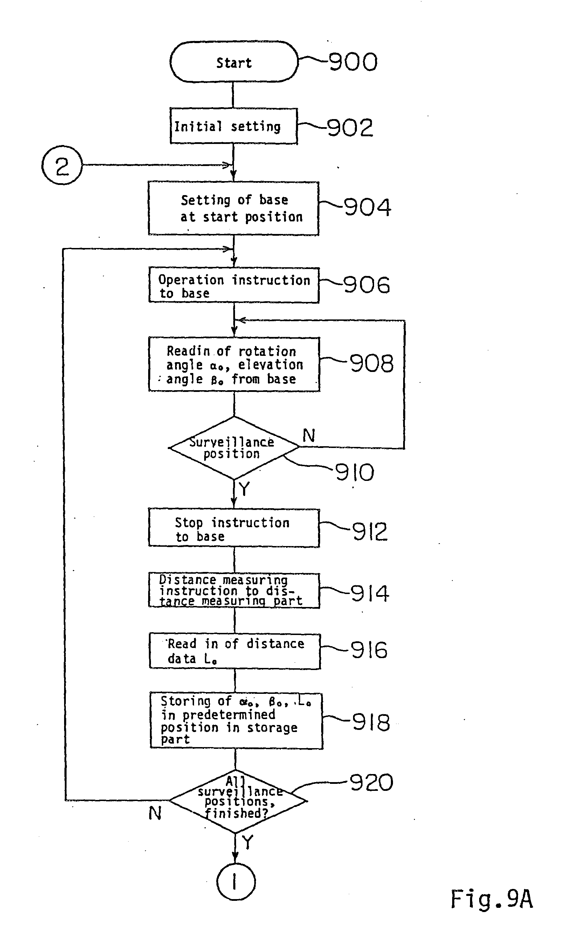

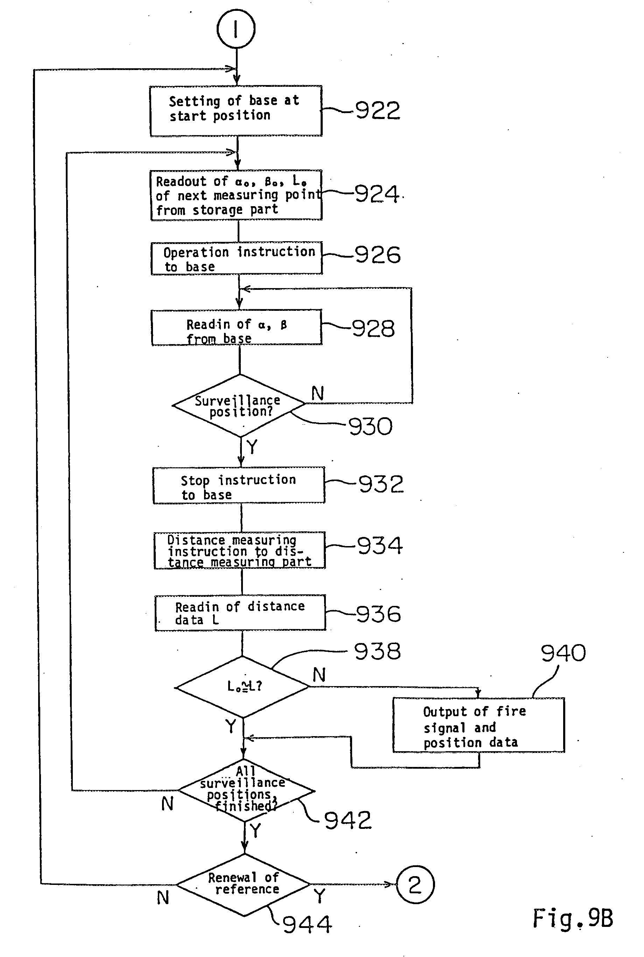

The fire detecting unit DE shown in Fig. 7 comprises:
- MPU1: a microcomputer,
- ROM1: a storage area to store programs with the flowcharts in Fig. 9A and 9B described later,
- ROM2: a storage area to store different constants,
- RAM1: a storage area for working,
- RAM2: a storage area to store the rotation and elevation angles alphaₒ, betaₒ, and the distance Lₒ to each surveillance point,
- DP: an indicator such as an indication lamp or CRT,
- DIP: a dip switch for setting the self-address and resetting the rotation and elevetion angles alphaₒ, betaₒ, and the distance Lₒ,
- TRX: a transmitting/receiving unit equipped with receiving circuit, serial/parallel converter, parallel/serial converter, and transmission circuit, and
- IF1 - IF5: interfaces.

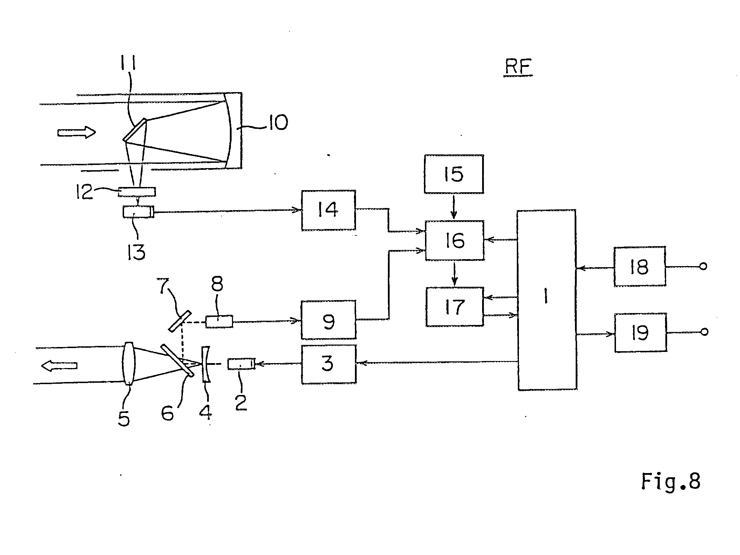

Fig. 8 shows the internal circuit of the distance meter RF shown in Fig. 7 comprising the following elements:
1 a microcomputer,
2 a light emitting element such as a laser diode which emits radiation having a wavelength in the range from 0.6 to 3 microns,
3 a light emission control circuit which causes the light emitting element 2 to emit pulsed light as per control by microcomputer 1,
4 a concave lens to expand the light emitted from the light emitting element 2,
5 a convex lens which shapes the light spread by the concave lens 4 to a beam of light,
6 a semipermeable mirror,
7 a reflecting mirror,
8 a photodiode which detects the light emitted from the light emitting element 2,
9 an amplifier,
10 a reflecting mirror to condense the reflected light, i.e. the laser beam light emitted from the light emitting element 2 and reflected from the wall surface, floor surface, etc.,
11 a further mirror,
12 an optical filter,
13 a light receiving element such as an avalanche photodiode or photomultiplier PMT to detect the reflected light, i.e. the laser beam emitted from the light emitting element 2 and reflected from the wall or floor surface etc.,
14 an amplifier,
15 an oscillator with a frequency of e.g. 150 MHz,
16 a gate circuit which is opened when the received light amplifying output of the amplifier 9 has reached a predetermined amplitude, allowing the oscillation signal from the oscillator 15 to pass, and which is closed when the received signal amplifying output of the amplifier 14 has reached a predetermined amplitude to inhibit passing of the oscillation signal from the oscillator 15,
17 a counter for the oscillation signal input through the gate circuit 16,
18 a receiving circuit to receive a control signal from the detecting unit DE, and
19 a transmission circuit to output signals such as a distance signal to the detecting unit DE.

The distance meter RF controls the light emission control circuit 3 and causes the light emitting element 2 to emit pulsed light when the microcomputer 1 has acknowledged the receipt of the distance measuring instruction from the detecting unit DE through the receiving circuit 18. Simultaneously the distance meter RF outputs the operation permission signal to the gate circuit 16 as well as the clear signal to counter 17.

When the photodiode 8 has detected the pulsed light emitted from the light emitting element 2, the gate circuit 16 is opened to input the oscillation signal from the oscillator 15 to the counter 17 which counts the oscillation signal.

When the avalanche photodiode 13 has received the reflected light from the point where the light from the light emitting element 2 was reflected, e.g. from the wall, floor, or ceiling surface, the gate circuit 16 is closed by the received light output and the counter 17 stops counting the oscillation signal.

The microcomputer 1 reads in the counted value from the counter 17 and computes the time taken from the start of light emission to the receipt of the returned light, and from the return time and the velocity of light the distance to the opposite surface, then outputs this distance data to the detecting unit DE through the transmission circuit 19.

While in the described embodiment the computation of the distance is performed by the distance meter RF, the evaluation of the travel time of returned light or the distance computation may also be performed by the detecting unit DE.

When using the received reflected light intensity for discrimination, a sample hold circuit and AD converter, for example, may be provided and arranged in such a way that the output of amplifier 14 is sampled by the sample hold circuit synchronously with the pulsed light emission, and the sampled output is converted to a digital signal which is input to the microcomputer 1, and the this data is output to the detector unit DE.

For detecting the position data of the electrically operated turn base MT, i.e. the rotation angle and elevation angle, a potentiometer or a pulse driven step motor may be used.

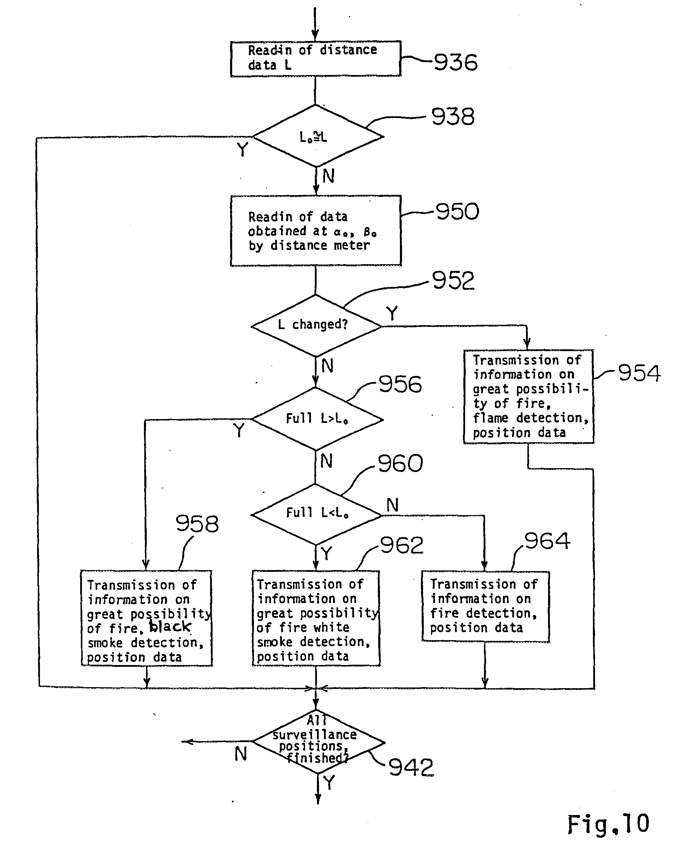

The operation of an embodiment of the fire detecting device including the distance meter RF and the detecting unit DE shown in figures 7 and 8 is described hereinafter by means of the flowcharts shown in the enclosed Figures 9A, 9B, and 10.

As described above, smoke surveillance can be done by distance measurement and also by additionally measuring the reflected light intensity. However, in the present embodiment, only the surveillance by distance measurement is considered and described.

Firstly, actions are taken to measure distances to plural objective points of surveillance in a surveilled space by means of the distance meter RF, and to store the rotation angle alphaₒ, the elevation angle betaₒ and the distance Lₒ of the base MT to each of the surveillance points in the data storage area RAM2 for use as reference values in the "fire" judgement action (Steps 904 - 920).

In this case, each objective point for surveillance of smoke by the fire detecting device can be determined with the angle of the base MT set to a fixed value betaₒ and the rotation angle set to a certain angle alphaₒ as reached when the base is turned, for example twice, from a reference position. Then, the distance data Lₒ to each objective point for surveillance, e.g. the wall facing the distance meter RF, is read in for each rotation angle alphaₒ and elevation angle betaₒ and stored in the reference data storage area RAM2 together with the corresponding rotation angle alphaₒ and elevation angle betaₒ from the reference position.

For flame surveillance by the fire detecting device, the objective point for surveillance is set at such a position as reached when the base MT is turned horizontally and vertically, for instance twice, at certain angles from certain reference positions. Then, the distance data Lₒ to said objective point for surveillance, e.g. the wall surface and the floor surface facing the distance meter RF, is read in for each rotation angle alphaₒ and elevation angle betaₒ and stored in the reference data storage area RAM2 together with the corresponding rotation angle data alphaₒ and elevation elevation angle data betaₒ of the base from the reference position.

Further, for both smoke and flame surveillance by the fire detecting device, it is possible to take the reference data by turning the distance meter horizontally and vertically, for instance twice, as done for flame surveillance, and to store them in the reference data storage area RAM2.

The embodiments shown in Figures 9A, 9B, and 10 describe the operations for both smoke and flame surveillance.

After the storage of rotation angla alphaₒ, elevation angle betaₒ, and distance Lₒ as reference data for each objective point for surveillance in the reference data storage means RAM2 at Steps 904 - 920 is completed, the base MT is turned to direct the distance meter toward each objective point for surveillance in sequence, thus performing the fire surveillance operation, measuring the distance L to each objective point for surveillance by the distance meter RF. Each distance L measured is stored in the working area RAM1 (Steps 922 - 936), then the distance L stored in the working area RAM1 is compared with the reference distance Lₒ to the same objective point for surveillance stored in the refernce data storage area RAM2 (Step 938). If L is almost equal Lₒ, this means that no smoke or flame exists between the distance meter RF and the objective point for surveillance, and the same surveillance operations starting from Step 924 are performed at the next objective point for surveillance. However, if L showes a deviation from Lₒ exceeding a permissible range, this is judged and signalled as "fire" and the information, e.g. the rotation angle alphaₒ, the elevation angle betaₒ of the base, and the distance Lₒ of the objective point for surveillance are output to the fire control panel RE or the like (Step 940).

Fig. 10 shows another embodiment of Step 940 shown in Fig. 9B, which is an example of programs to detect and discriminate modes of fire occurence, i.e. whether the "fire" judgement given at Step 938 is due to white smoke, black smoke, or flames. This discrimination is made by means of the difference in characteristics between white smoke, black smoke, and flames, i.e. by the fact that white smoke causes a decrease in measured distance with little fluctuation, while black smoke causes an increase of the measured distance with little fluctuation and the increased value approaching the infinite, and flames cause a change in distance with larger fluctuations compared with smoke.

If, as result of comparision at Step 938 in Fig. 10, it is judged that L has deviated from Lₒ (N at Step 938), the distance meter RF is fixed for the objective point for surveillance, and the distance meter data at said objective point for surveillance by predetermined time is read in (Step 950). Then judgement is made on the basis of the data obtained during said predetermined time whether there is any change in the measured value or not (Step 952). If the result of judgement reveals such a change as shown in Fig 6. (Y at Step 952), this means that there is a great possibility of a fire, i.e. a flame, and the position data alpha and beta, and an information on flame occurence are transmitted to the fire control panel RE (Step 954).

If no change in the distance data L is noted (N at Step 952), and yet all distance data L are larger than the reference data Lₒ (Y at Step 956), this indicates the presence of black smoke as illustrated in Fig. 4, and the position data and a black smoke information are transmitted to the fire control panel (Step 958).

But, if there is no change in the distance data L and yet all distance data L are smaller than the reference data Lₒ (N at Step 952, N at Step 956, Y at Step 960), this indicates the presence of white smoke as shown in Fig. 2, and similarly the position data and a white smoke information are transmitted to the fire control panel RE (Step 962).

However, if there are no large changes in the distance data L, and yet some are larger than the reference data Lₒ, and some are smaller, it is considered that black smoke existed at a certain time in the course of the measurement, and white smoke existed at another time. As it is considered that fire occurred in either case, the position data and a fire signal are transmitted to the fire control panel RE (Step 964).

Although it is specified in Fig. 10 that on detection of a distance change at Step 938 the distance meter is fixed at this point to continuously measure the distance at Step 950, the distance meter may be turned so that the distance is measured every time the distance meter is directed to the point for checking its change with time.

Arrangements may also be made so that the rotation angle alphaₒ, the elevation angle betaₒ, and the distance Lₒ used as reference data relating to the objective point such as the wall or floor surface are read in and stored not only at the initial time, but also at the time when alterations are made in the surveillance area, by operating the dip switch DIP or by control from the fire control panel (Step 944). Thus, it is possible to readily cope with any changes in the surveillance area which may frequently be made in premises like exhibition halls.

Although, by using an extremely well focussed laser beam, a wide area extending to more than hundred meters may be surveilled conveniently, also ordinary light emitting diodes and ordinary photodiodes may be used for fire and smoke surveilling of smaller spaces. When using such ordinary light emitting diodes, it is convenient to provide a lens in front of the photodiode so that a nearly parallel beam of light is formed, although a laser beam showing nearly no divergence is better suited for the surveillance of large rooms and large spaces.

While in the above described embodiment, discrimination of smoke and flames is made only by distance measurement, a more precise surveillance can be provided by making a discrimination by evaluating the reflected light intensity in addition to the distance measuring. In this case, besides the reference distance, the reference reflected intensity will have to be stored previously in the ROM or the like and input from the keyboard or the like. Thereby, a still better discrimination of different types of fire may be achieved.

## Claims

1. A fire detecting method in which a beam of electromagnetic radiation is emitted into a space to be surveilled, the radiation returned from the said space is measured and a fire signal is generated in response to a predetermined change of the measured returned radiation, characterized in that
the travel time (L ) of the returned radiation between emitting said radiation and receiving said returned radiation is measured and compared with a previously stored reference return time (Lₒ) , and a fire signal is generated when the measured return time (Lₒ) is deviating in a predetermined manner from said stored reference return time (Lₒ).

2. A method according to claim 1, characterized in that the reference return time value (Lₒ) corresponds to the distance to an opposite surface from which the emitted radiation is reflected and returned.

3. A method according to claim 1 or 2, characterized in that, additionally to indicating the existence of a fire, the kind of the fire is indicated,
a) wherein white smoke is indicated if the measured time (L) falls below said reference return time (Lₒ) to a certain degree and shows no fluctuation exceeding a predetermined value,
b) wherein black smoke is indicated when the measured return time (L) exceeds the reference return time (Lₒ) to a certain degree and shows no fluctuation exceeding a certain value, and
c) wherein a flame is indicated when the fluctuation of the measured return time (L ) exceeds a predetermined degree.

4. A method according to one of claims 1 to 3, characterized in that, additionally to measuring the return time of the emitted radiation, the intensity of the returned radiation is measured and compared with a previously stored reference intensity value, and a signal is given when the measured intensity deviates to a predetermined degree from the reference intensity value.

5. A fire detecting device using the method according to one of claims 1 to 4, characterized by
a) a beam type distance measuring means (RF) projecting a beam of electromagnetic radiation toward a surface in the surveilled space and measuring the return time of the radiation returned from said surface corresponding to the distance to said surface,
b) a storage means (RAM1) for storing the measured return time or distance to said surface as reference value,
c) a comparision means (938) comparing the return time measured during fire surveillance operation with said previously stored reference value, and
d) fire discriminating means (940) indicating the outbreak and/or the kind of a fire on the basis of the result of the comparision by the comparision means (938).

6. A device according to claim 5, characterized in that the distance measuring means (RF) is installed on a base (MT) which can be freely turned in all directions in a certain horizontal and vertical range, so that the distances to plural surfaces in the surveilled space can be measured and stored in the storage means (RAM2) as reference values together with the respective reference directions (alphaₒ, betaₒ) of the distance measuring means (RF).

7. A device according to claim 5 or 6, characterized in that the fire discrimination means comprises means to distinguish different kinds of fire by indicating a) white smoke if the measured return time or distance falls below the reference value to a certain degree and shows hardly fluctuation (962), b) black smoke if the measured return time or distance exceeds the reference value to a certain degree and shows hardly fluctuation (958), and c) a flame if if the measured return time or distance differs from the reference value and shows fluctuation exceeding a predetermined degree (954).

8. A device according to one of claims 6 to 8, characterized in that said distance meter (RF) is additionally measuring the intensity of the returned radiation, that said storing means is additionally storing the intensity of the returned radiation as a further reference value, that said comparing means is additionally comparing the returned radiation during fire surveillance with said reference values, and that the said fire discrimination means is considering for indicating white smoke if the intensity of the returned radiation exceeds the reference intensity, and for indicating black smoke if the intensity of the returned radiation falls below said reference intensity.

9. A device according one of claims 6 to 8, characterized in that the distance measuring means (RF) comprises a laser (2) emitting radiation in the range of wavelengthes between 0.6 and 3 microns.

10. A device according to one of claims 6 to 9, characterized in that the distance measuring (RF) means is emitting radiation pulses of short duration into the surveilled space from which the pulses are returned to a receiver (13), and at the same time, on a shorter path directly to a receiver (8), and a time measuring means (17) is provided for measuring the time difference between receiving said directly received radiation pulses and the radiation pulses returned from the surveilled space.

## Patentansprüche

1. Verfahren zur Feuerdetektion, bei welchem ein Strahl elektromagnetischer Strahlung in einen zu überwachenden Raum emittiert, die aus besagtem Raum zurückgekehrte Strahlung gemessen und ein Feuersignal in Reaktion auf eine vorbestimmte Änderung der zurückgekehrten Strahlung erzeugt wird, dadurch gekennzeichnet, dass die Laufzeit (L ) der zurückgekehrten Strahlung zwischen Emission der besagten Strahlung und Empfang der besagten zurückgekehrten Strahlung gemessen und mit einer vorgängig gespeicherten Referenzlaufzeit (Lₒ) verglichen wird, und ein Feuersignal erzeugt wird, wenn die gemessene Laufzeit (L ) in einer vorbestimmten Weise von der besagten gespeicherten Laufzeit (Lₒ) abweicht.

2. Verfahren nach Anspruch 1, dadurch gekennzeichnet, dass die Referenzrückkehrlaufzeit (Lₒ) der Entfernung einer gegenüberliegenden Oberfläche entspricht, von der die emittierte Strahlung reflektiert und zurückgeworfen wird.

3. Verfahren nach Anspruch 1 oder 2, dadurch gekennzeichnet, dass zusätzlich zur Anzeige des Vorhandenseins eines Feuers die Art des Feuers angezeigt wird, wobei
a) weisser Rauch angezeigt wird, wenn die gemessene Laufzeit (L ) um ein gewisses Mass unter die besagte Referenzlaufzeit (Lₒ) fällt und keine einen vorgegebenen Wert übersteigende Fluktuation zeigt,
b) schwarzer Rauch angezeigt wird, wenn die gemessene Laufzeit (L ) die Referenzlaufzeit (Lₒ) um ein gewisses Mass übersteigt und keine einen vorgegebenen Wert übersteigende Fluktuation zeigt, und
c) eine Flamme angezeigt wird, wenn die Fluktuation der gemessenen Rückkehrlaufzeit (L ) ein vorbestimmtes Mass übersteigt.

4. Verfahren nach einem der Ansprüche 1 - 3, dadurch gekennzeichnet, dass zusätzlich zur Messung der Rückkehrzeit der emittierten Strahlung die Intensität der zurückgekehrten Strahlung gemessen und mit einem vorgängig gespeicherten Intensitätsreferenzwert verglichen und ein Signal gegeben wird, wenn die gemessene Intensität um ein vorbestimmtes Mass vom Intensitätsreferenzwert abweicht.

5. Vorrichtung zur Feuerdetektion, die das Verfahren nach einem der Ansprüche 1 - 4 benutzt, gekennzeichnet durch
a) Mittel (RF) zur Entfernungsmessung nach dem Strahltyp, das einen Strahl elektromagnetischer Strahlung gegen eine Oberfläche im überwachten Raum aussendet und die Laufzeit der zurückgekehrten Strahlung entsprechend dem Abstand zu besagter Oberfläche misst,
b) Speichermittel (RAM1) zur Speicherung der gemessenen Laufzeit oder dem Abstand zu besagter Oberfläche als Referenzwert,
c) Vergleichsmittel (938) zum Vergleich der während der Feuerüberwachung gemessenen Rückkehrlaufzeit mit dem vorgängig gespeicherten Referenzwert, und
d) Feuerdiskriminationsmittel (940), die den Ausbruch und/oder die Art eines Feuers auf der Grundlage des Ergebnisses des Vergleichs durch das Vergleichsmittel (938) anzeigen.

6. Vorrichtung nach Anspruch 5, dadurch gekennzeichnet, dass das Entfernungsmessmittel (RF) auf einem Sockel angebracht ist, der in einem bestimmten horizontalen und vertikalen Bereich in allen Richtungen frei schwenkbar ist, so dass die Abstände zu mehreren Oberflächen im überwachten Raum gemessen und im Speichermittel (RAM2) als Referenzwerte zusammen mit den entsprechenden Referenzrichtungen (Alphaₒ, Betaₒ) gespeichert werden können.

7. Vorrichtung nach einem der Ansprüche 5 oder 6, dadurch gekennzeichnet, dass das Feuerdiskriminationsmittel Mittel zur Unterscheidung verschiedener Feuerarten umfasst, durch Anzeige von
a) weissem Rauch, wenn die gemessene Rückkehrlaufzeit oder der Abstand um ein gewisses Mass unter den Referenzwert fällt und kaum Fluktuation zeigt (962),
b) schwarzem Rauch, wenn die gemessene Rückkehrlaufzeit oder der Abstand den Referenzwert um ein gewisses Mass übersteigt und kaum Fluktuation zeigt (958), und
c) einer Flamme, wenn die gemessene Rückkehr lauf zeit oder der Abstand vom Referenzwert abweicht und eine ein vorbestimmtes Mass übersteigende Fluktuation zeigt (954).

8. Vorrichtung nach einem der Ansprüche 6 - 8, dadurch gekennzeichnet, dass besagtes Entfernungsmessmittel (RF) zusätzlich die Intensität der zurückgekehrten Strahlung misst, dass besagtes Speichermittel zusätzlich die Intensität der zurückgekehrten Strahlung als weiteren Referenzwert speichert, dass besagtes Vergleichsmittel zusätzlich die während der Feuerüberwachung zurückgekehrte Strahlung mit besagten Referenzwerten vergleicht, und dass besagtes Feuerdiskriminationsmittel zur Anzeige von weissem Rauch berücksichtigt, ob die Intensität der rückgekehrten Strahlung die Referenzintensität übersteigt, und zur Anzeige schwarzen Rauchs, ob die Intensität der rückgekehrten Strahlung besagte Referenzintensität unterschreitet.

9. Vorrichtung nach einem der Ansprüche 6 - 8, dadurch gekennzeichnet, dass das Entfernungsmessmittel (RF) einen LASER (2) umfasst, der Strahlung im Wellenlängenbereich zwischen 0.6 und 3 Mikrometer emittiert.

10. Vorrichtung nach einem der Ansprüche 6 - 9, dadurch gekennzeichnet, dass das Entfernungsmessmittel (RF) Strahlungsimpulse kurzer Dauer in den überwachten Raum emittiert, von welchem die Impulse zu einem Empfänger (13) zurückgesandt werden, und gleichzeitig auf einem kürzeren Pfad direkt zu einem Empfänger (8), und dass ein Zeitmessmittel (17) zur Messung der Zeitdifferenz zwischen dem Empfang besagter direkt zurückgesandter Strahlungsimpulse und den aus dem überwachten Raum zurückgekehrten Strahlungsimpulsen vorgesehen ist.

## Revendications

1. Procédé de détection d'incendie dans lequel un faisceau de rayonnement électromagnétique est émis à l'intérieur d'un espace à surveiller, le rayonnement renvoyé à partir dudit espace est mesuré et un signal d'incendie est engendré en réponse à un changement prédéterminé du rayonnement renvoyé mesuré, caractérisé en ce que le temps de trajet (L ) du rayonnement renvoyé entre l'émission dudit rayonnement et la réception dudit rayonnement renvoyé est mesuré et comparé à un temps de retour de référence (Lₒ) préalablement mémorisé, et un signal d'incendie est engendré lorsque le temps de retour mesuré (L ) dévie d'une manière prédéterminée dudit temps de retour de référence (Lₒ) mémorisé.

2. Procédé selon la revendication 1, caractérisé en ce que la valeur du temps de retour de référence (Lₒ) correspond à la distance jusqu'à une surface opposée à partir de laquelle le rayonnement émis est réfléchi et renvoyé.

3. Procédé selon la revendication 1 ou 2, caractérisé en ce qu'en plus d'indiquer l'existence d'un incendie, le type d'incendie est indiqué,
a) dans lequel une fumée blanche est indiquée si le temps mesuré (L ) tombe en dessous dudit temps de retour de référence (Lₒ) sur une certaine amplitude et ne présente pas de fluctuation dépassant une valeur prédéterminée,
b) dans lequel une fumée noire est indiquée lorsque le temps mesuré (L ) dépasse le temps de retour de référence (Lₒ) sur une certaine amplitude et ne présente pas de fluctuation dépassant une certaine valeur, et
c) dans lequel une flamme est indiquée lorsque la fluctuation du temps de retour mesuré (L) dépasse une amplitude prédéterminée.

4. Procédé selon l'une quelconque des revendications 1 à 3, caractérisé en ce qu'en plus de mesurer le temps de retour du rayonnement émis, l'intensité du rayonnement renvoyé est mesurée et comparée à une valeur d'intensité de référence mémorisée préalablement, et un signal est émis lorsque l'intensité mesurée dévie sur une amplitude prédéterminée de la valeur d'intensité de référence.

5. Dispositif de détection d'incendie utilisant le procédé selon l'une quelconque des revendications 1 à 4, caractérisé en ce qu'il comporte
a) des moyens de mesure de distance (RF) du type à faisceau projetant un faisceau de rayonnement électromagnétique en direction d'une surface située dans l'espace surveillé et mesurant le temps de retour du rayonnement renvoyé à partir de ladite surface correspondant à la distance jusqu'à ladite surface,
b) des moyens de mémorisation (RAM1) pour mémoriser le temps de retour mesuré ou la distance jusqu'à ladite surface en tant que valeur de référence,
c) des moyens de comparaison (938) comparant le temps de retour mesuré pendant une opération de surveillance d'incendie à ladite valeur de référence mémorisée préalablement, et
d) des moyens de détermination d'incendie (940) indiquant le commencement et/ou le type d'incendie sur la
base du résultat de la comparaison par les moyens de comparaison (938).

6. Dispositif selon la revendication 5, caractérisé en ce que les moyens de mesure de distance (RF) sont agencés sur une base (MT) qui peut tourner librement dans toutes les directions dans une certaine plage horizontale et verticale, de sorte que les distances jusqu'à plusieurs surfaces situées dans l'espace surveillé peuvent être mesurées et mémorisées dans les moyens de mémorisation (RAM2) en tant que valeurs de référence ainsi que les directions de référence respectives (alphaₒ, bêtaₒ) des moyens de mesure de distance (RF).

7. Dispositif selon la revendication 5 ou 6, caractérisé en ce que les moyens de détermination d'incendie comportent des moyens pour distinguer différents types d'incendie en indiquant
a) une fumée blanche si le temps mesuré ou la distance mesurée tombe en dessous de la valeur de référence sur une certaine amplitude et présente difficilement une fluctuation (962),
b) une fumée noire si le temps de retour mesuré ou la distance mesurée dépasse la valeur de référence sur une certaine amplitude et présente difficilement une fluctuation (958), et
c) une flamme si le temps de retour mesuré, ou la distance mesurée, est différent de la valeur de référence et présente des fluctuations dépassant une amplitude prédéterminée (954).

8. Dispositif selon l'une quelconque des revendications 6 à 8, caractérisé en ce que ledit dispositif de mesure de distance (RF) mesure de plus l'intensité du rayonnement renvoyé, en ce que lesdits moyens de mémorisation mémorisent de plus l'intensité du rayonnement renvoyé en tant qu'autre valeur de référence, lesdits moyens de comparaison comparent de plus le rayonnement renvoyé pendant une surveillance d'incendie auxdites valeurs de référence, et en ce que les moyens de détermination d'incendie sont prévus pour indiquer une fumée blanche si l'intensité du rayonnement renvoyé dépasse l'intensité de référence, et pour indiquer une fumée noire si l'intensité du rayonnement renvoyé tombe en dessous de ladite intensité de référence.

9. Dispositif selon l'une quelconque des revendications 6 à 8, caractérisé en ce que les moyens de mesure de distance (RF) comportent un laser (2) émettant un rayonnement situé dans la plage de longueurs d'onde entre 0,6 et 3 microns.

10. Dispositif selon l'une quelconque des revendications 6 à 9, caractérisé en ce que les moyens de mesure de distance (RF) émettent des impulsions de rayonnement de courte durée à l'intérieur de l'espace surveillé à partir duquel les impulsions sont renvoyées vers un récepteur (13), et en même temps, sur un trajet plus court, directement vers un récepteur (8), et des moyens de mesure du temps (17) sont agencés pour mesurer la différence de temps entre la réception desdites impulsions de rayonnement reçues directement et les impulsions de rayonnement renvoyées à partir de l'espace surveillé.
